# EUROPEAN PATENT SPECIFICATION

(11) **EP 0 922 485 B1**
(45) Date of publication and mention of the grant of the patent: **16.08.2006**
(21) Application number: 98123451.1
(22) Date of filing: 11.12.1998
(51) Int. Cl.: B01D 53/94, B01J 29/06, B01J 23/10

(54) **Combustion engine exhaust purifying catalyst**
Abgasreinigungskatalysator für eine Brennkraftmaschine
Catalyseur pour purifier de gaz d'échappement d'un moteur à combustion

(30) Priority: 12.12.1997 JP 34242197; 30.11.1998 JP 33861498
(43) Date of publication of application: 16.06.1999
(73) Proprietor: Mazda Motor Corporation, Aki-gun, Hiroshima-ken (JP)
(72) Inventor: Kurokawa, Takahiro, Hiroshima-shi, Hiroshima 731-0122 (JP); Watanabe, Yasuto, Iwakuni-shi, Yamaguchi 740-0022 (JP); Ueoka, Toshitsugu, Higashihiroshima-shi, Hiroshima 739-0146 (JP); Murakami, Hiroshi, Hiroshima-shi, Hiroshima 739-0321 (JP)
(74) Representative: Müller-Boré & Partner Patentanwälte

(56) References cited:
- EP-A- 0 485 180
- EP-A- 0 895 812
- DE-A- 4 435 074
- DE-A- 19 713 432
- US-A- 5 407 880
- DATABASE WPI Section Ch, Week 199631 Derwent Publications Ltd., London, GB; Class E36, AN 1996-304484 XP002125279 & JP 08 131838 A (HONDA MOTOR CO LTD), 28 May 1996 (1996-05-28)

## Description

The present invention relates to an exhaust gas purifying catalyst for purifying exhaust gas discharged from a diesel engine or the like.

### 2. Description of the prior art

In Japanese Laid-open Patent Publication No. 6-262089, there is disclosed a catalyst for purifying NOx (i.e. nitrogen oxides) in exhaust gas whose oxygen concentration is higher than that corresponding to theoretical air-fuel ratio. The catalyst has a first coating layer disposed on a honeycomb-formed substratum, the layer including a mixture composed of CeO₂ (cerium oxide) and activated alumina as its main contents and not including any noble metal. Further, the catalyst has a second coating layer disposed on the first coating layer, the layer including zeolite powder on which Cu or Co is supported by ion exchange as its main contents. In the catalyst, it is intended to improve its catalytic activity at low temperature as to NOx purifying under the condition of higher oxygen concentration by means of starting catalytic oxidative reaction in the first coating layer at earlier time when the temperature of the exhaust gas is lower yet so as to heat the second coating layer with heat produced by the reaction.

In Japanese Laid-open Patent Publication No. 7-213910, there is disclosed a catalyst for purifying HC (i.e. hydrocarbon) in exhaust gas whose oxygen concentration is near to that corresponding to theoretical air-fuel ratio, from time when the temperature is lower yet. The catalyst has a zeolite layer disposed on a substratum, and a catalytic layer disposed on the zeolite layer, in which at least one member selected from a group constructed of Pt, Pd and Rh is supported on activated ceria or activated alumina. In the catalyst, it is intended that the zeolite layer adsorbs HC when temperature of the exhaust gas is lower, and then when the adsorbed HC is released due to elevation of the temperature of the exhaust gas, the released HC is purified by the catalytic layer whose activity would be raised at this time.

In Japanese Laid-open Patent Publication No. 6-142519, there is disclosed a catalyst for adsorbing hydrocarbon, in which a first layer, a second layer and a third layer are stratified in turn on a monolithic substratum. Hereupon, the first layer includes ZSM-5 type of zeolite which is performed ion exchange by at least one metal selected from Cu and Pd. The second layer includes powder of activated ceria and/or alumina as its main contents, and at least one metal selected from Pt and Pd as its catalytic contents, which is supported by the powder. The third layer includes Rh as its catalytic contents. In the catalyst, it is intended to perform earlier temperature raising by disposing a catalytic layer for oxidizing HC (i.e. the second layer) outside of the layer for adsorbing HC (i.e. the first layer) so that the second layer can purify HC when this HC is released from the first layer. The third layer is provided to improve heat resistance of the catalyst. Ceria in the second layer is used to improve oxidative activity of Pt.

In Japanese Laid-open Patent Publication No. 7-24333, there is disclosed a catalyst for purifying NOx, which has upper and lower catalytic layers disposed on a substratum of the catalyst. Hereupon, the upper catalytic layer includes a mixture composed of CeO₂ and H-type of ZSM-5 on which Pt is supported. The lower catalytic layer includes H-type of ZMS-5 on which Pt is supported. In the catalyst, it is intended that the catalytic reactivity (i.e. ability for oxidizing HC) of Pt is lowered by adding CeO₂ to the upper catalytic layer, thereby HC is prevented from being completely oxidized in the upper catalytic layer so that NOx is effectively reduced and decomposed by utilizing the intermediate products (i.e. material which is partially oxidized) produced in the upper catalytic layer due to combustion of HC.

In Japanese Laid-open Patent Publication No. 8-131838, there is disclosed a catalyst for purifying NOx, in which a substratum supports a mixture composed of CeO₂ and zeolite on which Pt is supported by ion exchange. Further, in the Publication, there is such description that the amount of catalyst supported by one liter of substratum is 150 g, the concentration of zeolite on which Pt is supported by ion exchange in the catalyst is 30 wt % or 20 wt %, and concentration of Pt in the zeolite on which Pt is supported by ion exchange is 8.7 wt % (therefore, the amount of Pt supported by one liter of substratum is about 3.9 g or about 2.61 g). In the catalyst, it is intended to improve the ability for purifying NOx by combining CeO₂ with zeolite on which Pt is supported by ion exchange, based on the fact that CeO₂ has ability for adsorbing NOx.

However, in the above-mentioned catalyst for purifying NOx in which Cu or Co is supported on the zeolite by ion exchange (Japanese Laid-open Patent Publication No. 6-262089), the temperature at which the activity of the catalyst appears, is high (equal to or higher than 350 °C). Therefore, in the condition of so-called lean atmosphere that the oxygen concentration is higher than that corresponding to theoretical air-fuel ratio, even though both ceria and activated alumina are used, it is impossible to effectively purify NOx from earlier time that the temperature is lower than 300 °C. On the other hand, when a noble metal such as Pt is used as a catalytic metal and supported by zeolite (Japanese Laid-open Patent Publication No. 7-213910), the catalytic activity of the catalyst appears at relatively lower temperature. However, in this case, it is difficult to get a higher NOx purifying ratio, and further the catalyst has a tendency to become expensive due to increase of amount of used noble metal.

Meanwhile, although the above-mentioned catalyst, in which Pt is supported by ceria (Japanese Laid-open Patent Publication No. 6-142519), can effectively purify HC, it is not adequate to purify NOx. Further, in the above-mentioned catalyst for purifying NOx (Japanese Laid-open Patent Publication No. 7-24333), in which the upper layer includes the mixture composed of CeO₂ and H-type ZSM-5 supporting Pt and further the lower layer includes H-type ZSM-5 supporting Pt, it is also impossible to obtain higher NOx purifying ratio. In the above-mentioned catalyst for purifying NOx (Japanese Laid-open Patent Publication No. 8-131838), in which the mixture composed of CeO₂ and zeolite on which Pt is supported by ion exchange is supported by the substratum, because the catalyst includes relatively large amount of Pt, the oxidative function of the catalyst becomes stronger so that NO in the exhaust gas is oxidized so as to become NO₂. Therefore, the catalyst would be inadequate for reducing or purifying NOx to N₂.

The present invention has been developed to solve the problems of the prior art described above, and has an object of providing a catalyst which can effectively purify NOx in exhaust gas under the condition of so-called lean atmosphere in which oxygen concentration in the exhaust gas is higher than that corresponding to theoretical air-fuel ratio, without using so much amount of expensive materials, for example catalytic metals such as noble metal, zeolite etc.. The solution to the above technical problem is achieved by providing the subject matter defined in the claims.

The present inventors have achieved the object and obtained an unexpected effect by combining zeolite, on which Pt is supported by ion exchange (Hereinafter, it refers to "Pt ion -exchanged zeolite".), with cheap ceria, and stratifying the both on a substratum.

That is, according to the present invention, there is provided an exhaust gas purifying catalyst which is disposed in exhaust gas discharged from a combustion engine and purifies the exhaust gas. The catalyst includes a substratum and a catalytic material overlaying the substratum and including zeolite on which a noble metal is supported by ion exchange (i.e. ion-exchanged zeolite). Hereupon, the catalytic material further includes cerium oxide.

The exhaust gas purifying catalyst according to the invention of the present application is characterized in that the substratum is provided with a catalytic layer including Pt ion-exchanged zeolite and a further layer including CeO₂. Hereupon, the catalytic layer including the zeolite is located at outer side of the further layer including the CeO₂ with respect to the substratum.

According to the catalyst, higher NOx purifying ratio is achieved at relatively lower temperature under the condition that air-fuel ratio is lean (for example, oxygen concentration in the exhaust gas is higher than or equal to 10 % as to a diesel engine, and higher than or equal to 4 % as to a gasoline engine, A/F>22).

Although the reason why the above-mentioned effect is obtained is not completely made clear, it is supposed as follows. That is, fundamentally, the catalytic component, in which Pt is supported on zeolite by ion exchange, has a function to crack large HC (HC with large molecular weight) in the exhaust gas (e.g. HC in which the number of carbons is 12 to 20) into small and active HC (e.g. olefine) and further utilize the cracked HC so as to reduce and purify NOx in the exhaust gas. On the other hand, it is supposed that CeO₂ occludes oxygen in the exhaust gas so as to form an atmosphere which is suitable for cracking of HC and reduction of NOx by Pt ion-exchanged zeolite. Namely, it is supposed that the HC-cracking and NOx-reducing functions of Pt ion-exchanged zeolite and the O₂-occluding function of CeO₂ cooperates to each other so that effective result for purifying NOx is obtained.

In the catalyst according to the present invention, in order to obtain higher NOx purifying ratio, CeO₂ and Pt ion-exchanged zeolite are stratified. Hereupon, the type of stratifying form is not restricted to the above-mentioned manner. Namely, in contrast with the above-mentioned manner, the catalytic layer including Pt ion-exchanged zeolite may be disposed at a position nearer to the substratum (i.e. inner side) as compared with the further layer including CeO₂. A catalyst not according to the invention, in which Pt ion-exchanged zeolite and CeO₂ are mixed together, will be described later.

Although the reason why NOx purifying ratio of the stratified type of catalyst is higher than that of the mixed type of catalyst is not completely made clear, it is supposed as follows. That is, it is supposed that each of Pt ion-exchanged zeolite and CeO₂ can fully exhibit its function when it exists to a round amount to some degree, respectively, thereby an interaction which is suitable for purifying NOx is caused.

Meanwhile, in the case of the stratified type of catalyst, it is preferable that the catalytic layer including Pt ion-exchanged zeolite is located at outer side as compared with the further layer including CeO₂. The reason is that when the further layer including CeO₂ is disposed at outer side, there occurs such disadvantage that the layer tends to peel off.

Further, in the stratified type of catalyst, according to an experiment performed by the inventors, it is advantageous that the weight ratio defined as A/B is in the range of 1/9 (i.e. 1:9) to 5/5 (i.e. 5:5), wherein A means the amount of CeO₂ supported by the substratum, and B means the amount of Pt ion-exchanged zeolite supported by the substratum. Hereupon, it is supposed that if the proportion of CeO₂ supported by the substratum is excessively low, CeO₂ would not be able to exhibit sufficient function for occlude oxygen. On the other hand, it is supposed that if the proportion of Pt ion-exchanged zeolite supported by the substratum is excessively lower, zeolite would not be able to exhibit sufficiently fundamental catalytic function for cracking HC and reducing NOx.

Moreover, according to the above description, it would be apparent that the exhaust gas purifying catalyst, in which the substratum supports the catalytic layer for cracking HC in the exhaust gas so as to reduce NOx in the exhaust gas utilizing the cracked HC and the further layer including oxygen occluding agent, is an advantageous means for reducing and purifying NOx effectively under the condition that air-fuel ratio is lean, from time when the temperature is relatively lower yet.

When Pt ion-exchanged zeolite and CeO₂ are not stratified, hence, not according to the invention for example when they are mixed to be supported by the substratum, the amount of Pt supported by one liter of substratum may be set to 0.27 to 1.13 g. The reason will be made clear by the experimental result described later.

It is supposed that if the amount of Pt supported by one liter of substratum is smaller than 0.27 g, Pt which contributes to purify NOx is too little so that the NOx purifying ratio is lowered. Further, it is supposed that because Pt has a function to promote oxidative reaction as well as a function to promote reductive reaction, if the amount of Pt supported by one liter of substratum is larger than 1.13 g, the function to promote oxidative reaction is excessively strengthened so that the reduction or purification of NOx is disadvantaged, or Pt cannot effectively act as the agent for reducing NOx due to complete oxidization of HC.

Further, in the stratified type of catalyst, process for coating the substratum must be individually performed at every layer. On the other hand, in the mixed catalyst, there is such an advantage that the process for coating the substratum is simplified.

As the above-mentioned zeolite, MFI zeolite is preferable, and further β-type, Y-type (i.e. FAU zeolite) or any other type of zeolite may be also used.

As to the above-mentioned CeO₂, it may be in the form of ceria (cerium oxide) or in the form of complex oxide of Ce and Zr. Hereupon, it is advantageous to use ceria in view of improving NOx purifying ratio. However, heat resistance of ceria is lower. On the other hand, heat resistance of complex oxide of Ce and Zr is higher.

As the above-mentioned ceria, standard ceria in which its particle diameter is in the range of 2 to 4 µm and its specific surface area is about 100 m²/g, or fine ceria in which its particle diameter is in the range of 0.8 to 1.2 µm and its specific surface area is about 150 m²/g may be used.

Further, the catalyst described above is suitable for being disposed in an exhaust gas passage of a diesel engine and purifying exhaust gas discharged from the diesel engine. In this case, although the exhaust gas is so-called lean, namely produced from air and fuel whose air-fuel ratio is lean, the catalyst can effectively purify NOx in the exhaust gas.

Thus, in the exhaust gas purifying catalyst according to the present invention, because Pt ion-exchanged zeolite and CeO₂ are stratified, high NOx purifying ratio is obtained under the condition of so-called lean atmosphere or in time when temperature of the exhaust gas is lower.

The present invention will become more apparent from the following description with reference to the accompanying drawings, and in which:
Fig. 1 is a schematic section view showing an example of a stratified type of catalyst according to the present invention;
Fig. 2 is a schematic section view showing another example of a stratified type of catalyst according to the present invention;
Fig. 3 is a schematic section view showing a mixed type of catalyst not according to the invention; and
Fig. 4 is a graph showing a relation between amount of supported Pt and NOx purifying ratio in a mixed type of catalyst not according to the invention.

Hereinafter, preferred embodiments of the present invention will be concretely described.

### (As to construction of the catalysts)

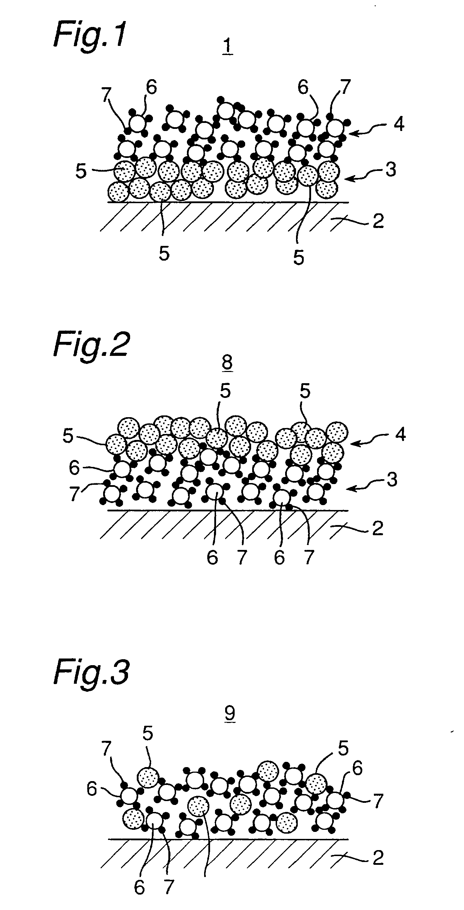

An exhaust gas purifying catalyst 1 for a diesel engine shown in Fig. 1 is a stratified type of catalyst. The catalyst 1 is provided with an inner catalytic layer 3 disposed on a surface of a substratum 2 and an outer catalytic layer 4 disposed on the inner catalytic layer 3. The substratum 2 is a monolithic substratum which is made of Cordierite and constructed to a honeycomb form. The inner catalytic layer 3 located at a position nearer to the substratum 2 is formed of a ceria-layer including ceria 5 (CeO₂) and binder (not shown) which is combined with the ceria 5 and attaches the ceria 5 to the substratum 2. The outer catalytic layer 4 located outer side with respect to the substratum 2 is formed of a zeolite layer including Pt exchanged zeolite in which Pt 7 (platinum) is supported on zeolite 6 by ion exchange and binder (not shown) which is combined with Pt ion-exchanged zeolite and attaches the zeolite to the surface of the inner catalytic layer 3. As the binder of each of the catalytic layers, for example, hydrated alumina may be used.

An exhaust gas purifying catalyst 8 for a diesel engine shown in Fig. 2 is also a stratified type of catalyst, which is provided with a inner catalytic layer 3 disposed on a surface of a substratum 2 and an outer catalytic layer 4. The catalyst 8 is different from the catalyst 1 shown in Fig. 1, in the point that the inner catalytic layer 3 is constructed of the zeolite layer with ion-exchanged Pt and the outer catalytic layer 4 is constructed of the ceria-layer.

An exhaust gas purifying catalyst 9 for a diesel engine shown in Fig. 3 (not according to the invention) is a mixed type of catalyst. In the catalyst 9, on a surface of a substratum 2, there is formed a catalytic layer composed of a mixture which is composed of Pt ion-exchanged zeolite in which Pt 7 (platinum) is supported on zeolite 6 by ion exchange, ceria 5 and binder.

### (As to manufacturing method of the catalysts)

The catalyst 1 shown in Fig. 1 can be manufactured according to the following procedure.

At first, in order to form the inner catalytic layer, ceria and binder are mixed together with weight ratio 5/1 (i.e. 5:1) of ceria and binder. Further, the mixture of ceria and binder is provided with water, and then mixed so as to form a slurry. Moreover, the slurry is applied to the substratum to form a wash-coat. Then, the substratum with the wash-coat is dried at a suitable temperature in the range of 120 to 150 °C (e.g. 130 °C), and further calcined (or fired) at a suitable temperature in the range of 450 to 600 °C (e.g. at 500 °C for 2 hours).

Next, in order to form the outer catalytic layer, Pt ion-exchanged zeolite and binder are mixed together with the weight ratio 5/1 (i.e. 5:1) of zeolite and binder. Further, the mixture of zeolite and binder is provided with water, and then mixed so as to form a slurry. Moreover, the slurry is applied to the substratum, on which the inner catalytic layer has been already formed, to form a wash-coat. Then, the substratum with the wash-coat is dried and calcined in the same manner as the case of the inner catalytic layer.

The above-mentioned Pt ion-exchanged zeolite can be prepared according to the following procedure.

At first, zeolite is provided with distilled water (i.e. pure water) of an adequate amount in the range of 10 to 50 times of the amount of zeolite (e.g. the amount of 10 times of the amount of zeolite), and then heated. Next, when temperature of the mixture of zeolite and water reaches an adequate temperature in the range of 90 to 100 °C (e.g. 90 °C), the mixture is provided with, for example, a predetermined amount of Pt ammine complex (it may be merely Pt complex), and then the mixture is held at the above-mentioned temperature for 3 hours. Then, to the mixture, there are performed a washing treatment, a drying treatment at about 150 °C and a calcining treatment at an adequate temperature in the range of 200 to 500 °C (e.g. 300 °C or 350 °C).

The stratified type of catalyst 8 shown in Fig. 2 may be manufactured in the similar manner as the catalyst 1 shown in Fig. 1, if the process for preparing the inner catalytic layer and the process for preparing the outer catalytic layer are exchanged to each other in the above-mentioned procedure for manufacturing the catalyst 1.

The mixed type of catalyst 9 shown in Fig. 3 (not according to the invention) may be manufactured according to the following procedure. That is, at first, Pt ion-exchanged zeolite and ceria are mixed together with an adequate weight ratio. Further, the mixture of zeolite and ceria is provided with, for example, binder of the amount of 1/5 of the total amount of the mixture and an adequate amount of water, and then mixed so as to form a slurry. Moreover, the slurry is applied to the substratum to form a wash-coat. Then, the substratum is dried and calcined in the same manner as the case of the above-mentioned catalyst 1 or 8.

### (As to NOx purifying characteristic of the catalysts)

### -- Sample catalyst --

With respect to each of the stratified type of catalyst shown in Fig. 1, the stratified type of catalyst shown in Fig. 2 and the mixed type of catalyst shown in Fig. 3, there were produced a few kinds of sample catalysts, each of which had different weight ratio of the amount of ceria and the amount of Pt ion-exchanged zeolite to one another, and further produced a sample catalyst which included Pt ion-exchanged zeolite and no ceria. Then, NOx purifying ratio of each of the sample catalysts was evaluated.

Hereupon, in each of the sample catalysts, the ceria component is standard ceria. Further, in the Pt ion-exchanged zeolite, the zeolite component is MFI type zeolite. The concentration of Pt is set to about 0.37 %. In each of the sample catalysts, the amount of catalyst in the wash-coat (amount after calcining treatment, except amount of binder) is set to 135 g per one liter of substratum.

Therefore, in the comparative catalyst, the amount of Pt supported by one liter of substratum is 0.5 g (0.0037x135 g). Further, for example, in the catalyst in which the ratio of the amount of ceria to the amount of Pt ion-exchanged zeolite is set to 3/7 (i.e. 3:7), the amount of ceria in the wash-coat is 40.5 g/L, and the amount of Pt ion-exchanged zeolite in the wash-coat is 94.5 g/L. In consequence, the amount of Pt supported by one liter of substratum is about 0.35 g (0.0037x94.5 g). As shown in Table 1, in each of the stratified type of catalysts shown in Figs. 1 and 2, the ratio of the amount of ceria to the amount of Pt ion-exchanged zeolite is any one of the following four kinds of values, that is 1/9 (i.e. 1:9), 3/7 (i.e. 3:7), 5/5 (i.e. 5:5) or 7/3 (i.e. 7:3). Further, in the mixed type of catalyst shown in Fig. 3, the ratio is any one of the following five kinds of values, that is 9/1 (i.e. 9:1) or any one of the above-mentioned four kinds of values.

Hereupon, the amount of impurities of each of the sample catalysts is less than or equal to 1 %. This is applied to the sample catalysts described hereinafter.

### -- Measurement of NOx purifying ratio --

The NOx purifying ratio of each of the sample catalysts was measured by rig evaluation test. In the test, as simulated gas, there was used helium gas containing 170 ppm of propylene, 170 ppm of NOx, 200 ppm of CO, 100 ppm of SO₂ and 10 % of O₂. Thus, the NOx purifying ratio (i.e. conversion ratio of NOx to N₂) was measured at 250 °C, 275 °C and 300 °C of gas temperature, while holding space velocity at 85000 h⁻¹, and then the average value of the three NOx purifying ratios was calculated. The result is shown in Table 1.

**Table 1 NOx purifying ratio**

| | | (Ceria)/(Pt-exchanged zeolite) | | | | | |
|---|---|---|---|---|---|---|---|
| | | 1/9 | 3/7 | 5/5 | 7/3* | 9/1* | 0/10 |
| Pt / L-substratum [g] | | 0.45 | 0.35 | 0.25 | 0.15 | 0.05 | 0.50 |
| NOx purifying ratio [%] | Mixed type | 40 | 32 | 17 | 18 | 16 | 33 (Comparative) |
| | Stratiform (ceria;inner) | 44 | 44 | 41 | 38 | | |
| | Stratiform (ceria;outer) | 45 | 43 | 42 | 36 | | |

| | | | | | | | |
|---|---|---|---|---|---|---|---|
| * Reference Examples | | | | | | | |

According to Table 1, as to the mixed type of catalysts, when the ratio of the amount of ceria to the amount of Pt ion-exchanged zeolite is 1/9, the NOx purifying ratio is higher than that of the comparative catalyst which does not include ceria. On the other hand, as to the stratified type of catalysts, the NOx purifying ratio of every one is higher than that of the comparative catalyst. Hereupon, the lower the proportion of ceria is, the higher the NOx purifying ratio becomes. In consequence, it would be understood that the present invention is effective for the stratified type of catalysts. However, it would be also understood that the proportion of ceria should be lower as to the mixed type of catalyst. Further, it would be understood that the weight ratio A/B of the amount of ceria A per one liter of substratum to the amount of Pt-exchanged zeolite B per one liter of substratum is set to an adequate value in the range of 1/9 to 5/5 as to the stratified type of catalyst. Particularly, it is preferable that the proportion of ceria is lower.

### -- Study about other catalytic materials used in combination with Pt ion-exchanged zeolite --

Sample catalysts similar to the stratified type of catalyst shown in Fig. 1 except having other kinds of inner catalytic layers different from the inner catalytic layer shown in Fig. 1, were produced in the same manner as the above-mentioned case. Then, NOx purifying ratio of each of the of inner catalytic layers, such as a layer including complex oxide of Ce (cerium) and Zr (zirconium), a layer including zirconium oxide and a layer including lanthanum oxide. In each of the sample catalysts, the ratio of the inner catalytic layer (complex oxide etc.) to the outer catalytic layer (Pt ion-exchanged zeolite) is 7/3. Hereupon, two kinds of complex oxides were prepared, in which the ratio of CeO₂ to ZrO₂ was 9/1 or 3/1. In Table 2, there are shown the measured NOx purifying ratio of each of the sample catalysts, as well as those of the comparative catalyst and the sample catalyst described above, in which the inner catalytic layer is a ceria layer.

**Table 2 NOx purifying ratio**

| | Kind of inner catalytic layer | | | | | |
|---|---|---|---|---|---|---|
| | Ceria | Ce-Zr complex oxide | | ZrO₂* | La₂O₃* | None* |
| | | CeO₂/ZrO₂ =9/1 | CeO₂/ZrO₂ =3/1 | | | |
| NOx purifying ratio [%] | 38 | 36 | 35 | 32 | 30 | 33 |
| Remarks | Outer layer ; Pt ion-exchanged zeolite, (inner layer)/(outer layer) = 7/3 | | | | | |

| | | | | | | |
|---|---|---|---|---|---|---|
| * Reference Examples | | | | | | |

According to Table 2, although NOx purifying ratio of each of the catalysts using complex oxide is lower than that of the catalyst using ceria, it is better than that of the comparative catalyst. Therefore, it would be understood that the above-mentioned catalyst using complex oxide is also useful for purifying NOx. However, it is noted that NOx purifying ratio of the catalyst using zirconium oxide or lanthanum oxide is lower than that of the comparative catalyst.

### -- Comparison of Pt and Cu in the catalysts constructed as Fig. 1 --

By changing Pt supported on zeolite (MFI) by ion exchange to Cu in the catalyst constructed as Fig. 1, there were produced a first comparative catalyst ((CeO₂)/(Cu ion-exchanged zeolite) being 1/9, and the amount of Cu supported by one liter of substratum being 4.55 g), a second comparative catalyst ((CeO₂)/(Cu ion-exchanged zeolite) being 3/7, and the amount of Cu supported by one liter of substratum being 5.85 g) and a third comparative catalyst ((CeO₂)/(Cu ion-exchanged zeolite) being 0/10, and the amount of Cu supported by one liter of substratum being 6.5 g) which was not provided with a catalytic layer of CeO₂. Then, NOx purifying ratio of each of the catalysts was measured. The method and condition for measuring those are as same as those in the case of Table 1.

Hereupon, the method for producing Cu ion-exchanged zeolite is as follows. That is, a predetermined amount of zeolite is weighed. Further, there is weighed Cu of an adequate amount in the range of 2 to 5 times of molar number of ion-exchanging sites of the zeolite. Hereupon, copper nitrate or copper acetate is used as the Cu material (i.e. source of Cu). Then the Cu material is dissolved in water of an adequate amount in the range of 5 to 20 times of the amount of the zeolite so as to prepare aqueous solution. The above-mentioned zeolite is added to the aqueous solution, and then the mixture is stirred for 8 hours. Hereupon, the temperature of the mixture is held at an adequate temperature in the range of room temperature to 50 °C. Thus, after the mixture is cooled, it is, in turn, subjected to a washing treatment, a drying treatment and a calcining treatment. Hereupon, the drying treatment is performed at 150 °C, and the calcining treatment is performed at 500 °C for 2 hours.

In Table 3, there are shown the measured NOx purifying ratio of each of the catalysts using Cu ion-exchanged zeolite, in comparison with those of the catalyst using Pt ion-exchanged zeolite.

**Table 3 NOx purifying ratio**

| (CeO₂)/(ion-exchanged zeolite) | | NOx purifying ratio [%] | |
|---|---|---|---|
| | | Pt^{δ+}/Z | Cu^{δ+}/Z |
| 1/9 (1:9) | | 44 | 11.1 |
| 3/7 (3:7) | | 44 | 11.2 |
| Remarks | Pt^{δ+}/Z ; Pt ion-exchanged zeolite | | |
| | Cu^{δ+}/Z ; Cu ion-exchanged zeolite | | |

According to Table 3, it would be understood that the present invention is useful, because NOx purifying ratio of each of the catalysts including Pt ion-exchanged zeolite is much higher than that of each of the catalyst including Cu ion-exchanged zeolite.

### -- Comparison of Pt, Cu and Pd in the catalysts constructed as Fig. 2 --

By changing Pt supported on zeolite (MFI) by ion exchange to Cu or Pd in the catalyst constructed as Fig. 2, there were produced a first comparative catalyst ((CeO₂)/(Cu ion-exchanged zeolite) being 1/9, and the amount of Cu supported by one liter of substratum being 4.55 g), a second comparative catalyst ((CeO₂)/(Pd ion-exchanged zeolite) being 1/9, and the amount of Pd supported by one liter of substratum being 5.85 g) and a third comparative catalyst ((CeO₂)/(zeolite supporting Pt) being 1/9, and the amount of Pt supported by one liter of substratum being 1.8 g) in which Pt is supported on zeolite (MFI) by drying and solidifying process, not ionexchange. Then, NOx purifying ratio of each of the comparative catalysts was measured. The method and condition for measuring those are as same as those in case of Table 1.

Hereupon, the method for producing Pd ion-exchanged zeolite is as follows. That is, a predetermined amount of zeolite is weighed. Further, there is weighed Pd of the amount corresponding to 4.2 wt % of the amount of the above-mentioned zeolite. Hereupon, tetrammine Pd solution (Pd(NH₃)₄Cl₂) is used as the Pd material (i.e. source of Pd). The above-mentioned zeolite is added to water of an adequate amount in the range of 5 to 50 times of the amount of zeolite, and then the mixture is heated while being stirred. Then, when temperature of the mixture is raised to an adequate temperature in the range of 90 to 100 °C, the above-mentioned Pd material is added to the mixture, and then heating and stirring of the mixture is continued (at 90 to 100 °C for 6 hours). Thus, after the mixture is cooled, it is, in turn, subjected to a washing treatment, a drying treatment and a calcining treatment. Hereupon, the drying treatment is performed at 150 °C, and the calcining treatment is performed at 350 °C for 2 hours.

In Table 4, there are shown the measured NOx purifying ratio of each of the catalysts, in comparison with those of the catalyst using Pt ion-exchanged zeolite.

According to Table 4, it would be understood that the present invention is useful, because NOx purifying ratio of each of the catalysts including Pt ion-exchanged zeolite is much higher than that of the other comparative catalysts.

**Table 4 NOx purifying ratio**

| Catalyst type | Amount of supported metal [g/L] | NOx purifying ratio [%] |
|---|---|---|
| Pt^{δ+}/Z | 0.45 | 44 |
| Pt/Z | 1.8 | 12.3 |
| Cu^{δ+}/Z | 5.95 | 10.6 |
| Pd^{δ+}/Z | 0.45 | 4.7 |
| Remarks | | |
| Pt^{δ+}/Z ; Pt ion-exchanged zeolite | | |
| Pt/Z ; Pt dried and solidified zeolite | | |
| Cu^{δ+}/Z ; Cu ion-exchanged zeolite | | |
| Pd^{δ+}/Z ; Pd ion-exchanged zeolite | | |
| (CeO₂)/(ion-exchanged zeolite)=1/9 in every catalyst | | |

### -- As to amount of supported Pt in the catalyst constructed as Fig. 3 --

With respect to mixed type of catalysts constructed as Fig. 3 (not according to the invention), in which the amount of Pt supported by one liter of substratum are different from to one another in the range of 0.09 to 4.5 g/L, their NOx purifying ratios were measured. The method and condition for measuring those are as same as those in case of Table 1.

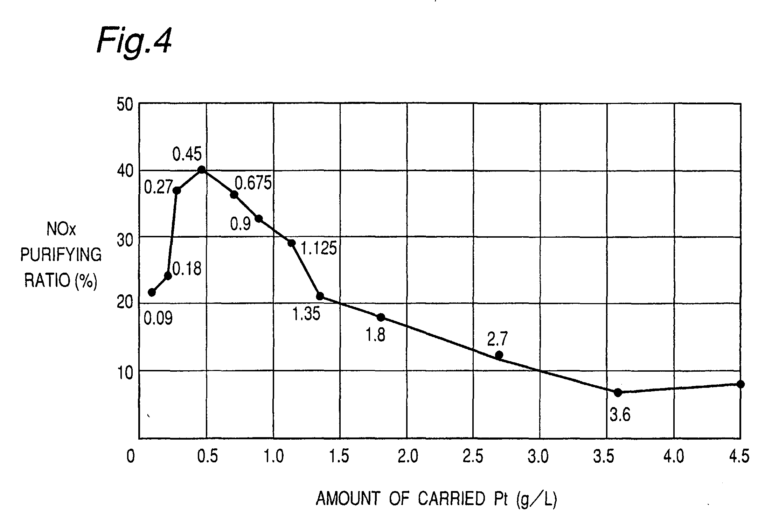

The measured NOx purifying ratio of each of the catalysts (not according to the invention) is shown in Fig. 4. According to Fig. 4, the following facts are recognized. That is, although NOx purifying ratio is higher when the amount of supported Pt is in the range of 0.27 to 1.125 (about 1.13 g) g/L, NOx purifying ratio is remarkably lower when the amount of supported Pt is larger or smaller than the above-mentioned range. Therefore, it would be understood that it is advantageous that the amount of supported Pt is set to an adequate value in the range of 0.27 to 1.13 g/l as to the mixed type of catalyst.

In the above-mentioned embodiments for measuring NOx purifying ratio, propylene is used as HC. However, it has been confirmed that the same result or effect is obtained when cetane, which is a large HC species, is used.

## Claims

1. An exhaust gas purifying catalyst which is disposed in exhaust gas discharged from a combustion engine and purifies NOx of said exhaust gas, said catalyst comprising:
a substratum; and
a catalytic material overlaying said substratum which comprises a first catalytic layer consisting of a zeolite on which platinum is supported by ion exchange, and a second catalytic layer consisting of cerium oxide or a complex oxide of cerium and zirconium, in which one of said first catalytic layer and said second catalytic layer is located at the position which is nearer to said substratum as compared with the other catalytic layer, wherein the amount of platinum supported on said zeolite by ion exchange is in the range of 0.25 to 0.45 grams per one liter of said substratum and a weight ratio defined as A/B is in the range of 1/9 to 5/5, A being an amount of said cerium oxide supported by said substratum, and B being an amount of Pt ion exchanged zeolite supported by said substratum.

2. The exhaust gas purifying catalyst according to claim 1, wherein said first catalytic layer is located at the position which is nearer to said substratum as compared with said second catalytic layer.

3. The exhaust gas purifying catalyst according to claim 1, wherein said second catalytic layer is located at the position which is nearer to said substratum as compared with said first catalytic layer.

## Patentansprüche

1. Abgasreinigungskatalysator, der in Abgas, welches von einem Verbrennungsmotor ausgetragen wird, angeordnet ist und NOx des Abgases reinigt, wobei der Katalysator:
ein Substrat und
ein katalytisches Material umfaßt, welches das Substrat bedeckt, umfassend eine erste Katalysatorschicht, bestehend aus einem Zeolith, auf dem Platin durch Ionenaustausch getragen ist, und eine zweite Katalysatorschicht, bestehend aus Ceroxid oder einem Mischoxid von Cer und Zirconium, wobei eine von der ersten Katalysatorschicht und der zweiten Katalysatorschicht an einer Position angeordnet ist, welche verglichen mit der anderen Katalysatorschicht näher an dem Substrat ist, wobei die Menge an Platin, welches auf dem Zeolith durch Ionenaustausch getragen ist, in einem Bereich von 0,25 bis 0,45 Gramm, bezogen auf einen Liter des Substrats, liegt und ein Gewichtsverhältnis, definiert als A/B, in einem Bereich von 1/9 bis 5/5 liegt, wobei A eine Menge des Ceroxids, welches durch das Substrat getragen ist, und B eine Menge an Ptionenausgetauschtem Zeolith, der durch das Substrat getragen ist, sind.

2. Abgasreinigungskatalysator nach Anspruch 1, wobei die erste Katalysatorschicht an einer Position angeordnet ist, welche verglichen mit der zweiten Katalysatorschicht näher an dem Substrat ist.

3. Abgasreinigungskatalysator nach Anspruch 1, wobei die zweite Katalysatorschicht an einer Position angeordnet ist, welche verglichen mit der ersten Katalysatorschicht näher an dem Substrat ist.

## Revendications

1. Catalyseur d'épuration de gaz d'échappement disposé dans les gaz d'échappement déchargés par un moteur à combustion interne pour éliminer les NOx présents dans lesdits gaz d'échappement, ledit catalyseur comprenant :
un substrat et
un matériau catalytique qui recouvre ledit substrat et qui comprend une première couche de catalyseur constituée d'une zéolithe sur laquelle du platine a été déposé par échange d'ions et une deuxième couche de catalyseur constituée d'oxyde de cérium ou d'un oxyde complexe de cérium et de zirconium, la première ou la deuxième couche de catalyseur étant située en une position plus proche dudit substrat que l'autre couche de catalyseur, la quantité de platine déposée sur ladite zéolithe par échange d'ions étant comprise dans la plage de 0,25 à 0,45 grammes par litre dudit substrat, avec un rapport pondéral défini par A/B, A étant la quantité dudit oxyde de cérium portée par ledit substrat et B étant la quantité de zéolithe remplacée par des ions Pt déposée sur ledit substrat; étant compris dans la plage de 1/9 à 5/5.

2. Catalyseur d'épuration de gaz d'échappement selon la revendication 1, dans lequel ladite première couche catalytique est située en une position plus proche dudit substrat que ladite deuxième couche catalytique.

3. Catalyseur d'épuration de gaz d'échappement selon la revendication 1, dans lequel ladite deuxième première couche catalytique est située en une position plus proche dudit substrat que ladite première couche catalytique.
